# FASCICULE DE BREVET EUROPEEN

(11) **EP 3 225 607 B1**
(45) Date de publication et mention de la délivrance du brevet: **05.05.2021**
(21) Numéro de dépôt: 17162369.7
(22) Date de dépôt: 22.03.2017
(51) Int. Cl.: C04B 28/26

(54) **PROCÉDÉ DE PRÉPARATION DES MOUSSES RIGIDES MINÉRALES POREUSES**
VERFAHREN ZUR HERSTELLUNG FESTER PORÖSER MINERALISCHER SCHAUMSTOFFE
PROCESS FOR THE PREPARATION OF SOLID POROUS MINERAL FOAMS

(30) Priorité: 30.03.2016 FR 1652756
(43) Date de publication de la demande: 04.10.2017
(73) Titulaire: IPSIIS, 77550 Moissy-Cramayel (FR)
(72) Inventeur: LE CORFEC, Yves, 91390 Morsang sur Orge (FR)
(74) Mandataire: IPAZ

(56) Documents cités:
- EP-A1- 3 006 417
- EP-A2- 1 164 179
- EP-A2- 1 945 593
- WO-A2-2008/146320
- JP-A- 2001 072 480

## Description

La présente invention concerne un procédé de préparation des mousses rigides minérales et poreuses et leurs applications en tant que matériau isolant thermique réfractaire dans la construction ou l'industrie.

La raréfaction des énergies fossiles et ressources primaires impose le développement de nouveaux matériaux isolants thermiques efficaces et acceptables sur le plan environnemental. Les matériaux actuellement utilisés dans l'isolation du bâtiment sont efficaces mais présentent des faiblesses. Certains matériaux, tels que la mousse de polyuréthane, la ouate de polyester, le polystyrène expansé ou extrudé, ou les matériaux isolants d'origine végétale ou animale, sont inflammables. Certains des matériaux isolants actuellement disponibles sur le marché peuvent nuire à la santé ou l'environnement. D'autres n'améliorent ni la résistance au feu, ni la sécurité incendie et peuvent présenter des contraintes de recyclage.

Ces dernières années, le centre d'intérêt du développement de nouveaux matériaux isolants thermiques et réfractaires s'est déplacé vers des matériaux à base de minéraux, connus pour être réfractaires. Plusieurs méthodes de production ont été proposées dans la littérature pour la production des matériaux minéraux légers, souvent sous forme de mousse rigide.

La demande WO 2007/043022 décrit un procédé de fabrication d'un matériau céramique réfractaire à porosité à partir d'une suspension aqueuse de poudres céramiques dans laquelle sont ajoutés un agent organique granulaire comme agent porogène et un agent moussant. Après la stabilisation, cette mousse subit un premier traitement thermique à une température entre 50°C et 110°C et un second traitement thermique à une température supérieure à 1500°C. Ce traitement thermique permet de calciner les agents porogènes pour générer de la porosité du matériau.

La demande WO 2008/146320 décrit un matériau isolant thermique et acoustique. Ce matériau possède une structure cellulaire comprenant des fibres céramiques, telles que la laine de verre ou la laine minérale et est formé par une émulsion en mousse comprenant des fibres céramiques, au moins un agent de liaison à base de silicate et au moins un agent moussantémulsifiant organique. La longueur des fibres utilisées est de préférence de 0,2 cm à 5cm. La susdite émulsion subit d'abord un premier traitement thermique de 70°C à 120 °C pour consolider la structure de la mousse et obtenir un corps solide. Ledit corps solide subit ensuite un deuxième traitement thermique à haute température, notamment de 400°C à 800°C pour éliminer les composants organiques présents dans ledit corps solide et obtenir le matériau final.

Ces matériaux sont réfractaires et efficaces sur le plan de l'isolation thermique. Cependant, leur production est énergiquement coûteuse, à cause de la nécessité d'un traitement thermique à haute température.

Il existe par conséquent un besoin pour des matériaux sains et susceptibles d'être obtenus par un procédé simple et bon marché, possédant un excellent caractère isolant et réfractaire, et de faible coût de production, pour être utilisés dans la construction de bâtiment et l'industrie.

La présente invention a donc pour but de remédier aux inconvénients susmentionnés en proposant un nouveau procédé de préparation des mousses rigides minérales et poreuses.

Ledit procédé consiste en les étapes suivantes :
(i) la préparation d'une suspension aqueuse comprenant ou constituée par
   - 35%-60% d'eau en poids total de la susdite suspension,
   - 5-35% en poids total de la susdite suspension d'un silicate de métal alcalin, d'un aluminate de métal alcalin, ou de leurs mélanges,
   - 30-60% en poids total de la susdite suspension de particules minérales insolubles dans la susdite suspension,
   - 0-2% en poids total de la susdite suspension de fibres minérales ou organiques,
   - 0,3-10%, notamment 0,3-5%, en poids total de la susdite suspension d'au moins un agent moussant d'origine animale ou végétale, naturel ou synthétique,
   - éventuellement au moins un agent texturant,
   - éventuellement, au moins une molécule fonctionnelle, et
   - éventuellement, un tensioactif différent de l'agent moussant utilisé dans ladite suspension,
(ii) la dispersion d'un gaz dans la susdite suspension pour obtenir une mousse humide stable ;
(iii) le durcissement de la mousse humide obtenue à la fin de l'étape (ii) pour obtenir ladite mousse rigide.

L'invention propose un procédé facile à mettre en œuvre et écologiquement responsable. Le procédé de l'invention permet de valoriser des ressources naturelles et matériaux recyclés dans une production à très bas coût marginal.

Les mousses rigides poreuses obtenues par le procédé de la présente invention possèdent d'excellentes propriétés d'isolation thermique et/ou phonique, une bonne capacité thermique, et sont susceptibles de résister à de hautes températures (supérieures à 1000°C voire 1500°C selon les matières premières choisies).

Les mousses rigides obtenues par le procédé de l'invention présentent une double porosité ouverte. La porosité de ces matériaux est attribuée à la fois aux bulles de gaz constituant initialement une mousse humide stable et à l'élimination de l'eau initialement présente dans cette mousse humide, et également aux entraînements d'air piégés sur les particules micrométriques de la suspension, qui produisent des micropores et nanopores. Conformément à l'invention, le gaz dispersé génère des pores de taille de l'ordre de la dizaine de micromètres, alors que les pores de l'ordre de la centaine de nanomètres sont produites lors de l'évaporation de l'eau.

Le procédé est particulièrement favorable en terme énergétique car le durcissement de la mousse humide ne nécessite aucun traitement thermique à haute température préalable à l'obtention d'un matériau présentant des caractéristiques isolantes et réfractaires satisfaisantes.

Un autre avantage du procédé de la présente invention résulte de la possibilité d'une préparation préalable à l'emploi de la suspension aqueuse. La suspension aqueuse de l'étape (i) peut se conserver pendant plusieurs mois sans altérations notables de ses propriétés et de son potentiel.

Conformément à l'invention, un silicate de métal alcalin constitue un précurseur de liant permettant l'agrégation des particules minérales.

A titre d'exemple de silicate de métal alcalin, on peut notamment citer le silicate de sodium, de magnésium, ou de potassium.

A titre d'exemple d'aluminate de métal alcalin, on peut notamment citer l'aluminate de sodium, de magnésium, ou de potassium.

De manière générale, le silicate de sodium utilisé dans l'invention possède un ratio molaire SiO₂/Na₂O compris entre 2 et 4. Le choix de ce ratio influence le pH de la suspension obtenue dans la susdite étape (i): un ratio inférieur à 2,8 conduit à une suspension fortement alcaline ; un ratio supérieur à 2,9 permet, en revanche, de produire une suspension plus proche de la neutralité.

Un pH trop élevé de la suspension aqueuse de l'étape (i) peut conduire à une coagulation des agents moussants de cette suspension et donc à la constitution de macroporosités.

L'homme du métier saura adapter la concentration de la solution de silicate et/ou aluminate de métal alcalin en fonction de la nature et de l'état de surface des particules et/ou fibres mises en œuvre et selon les caractéristiques mécaniques recherchées pour le matériau fini.

Avantageusement, la proportion pondérale de silicate de métal alcalin ou d'aluminate de métal alcalin ou de leurs mélanges dans une suspension aqueuse de l'étape (i) est de 5 à 15%.

Dans un mode de réalisation particulier, le silicate de métal alcalin peut être produit *in situ* directement dans la suspension aqueuse selon les méthodes conventionnelles connues de l'homme du métier.

Dans le cadre de la présente invention, les minéraux en tant que matière première utilisés pour l'obtention de la suspension aqueuse sont sous forme particulaire.

On entend par « particule » des poudres ayant un diamètre de grain médian de 1 à 100 µm, idéalement compris entre 5 et 50 µm.

A titre d'exemple, les particules minérales susceptibles d'être utilisées dans le cadre de l'invention sont les particules d'un ou plusieurs minéraux choisis dans le groupe comprenant les verres, briques, grès, feldspaths, céramiques, argiles, argiles déhydroxylées, carbonates, phosphates, oxydes métalliques, borures de métaux ou de silicium, carbures de métaux ou de silicium, laitiers, cendres et mélanges silico-alumineux, nitrures, microballons de silice ou cénosphères, les silicates tels que le silicate de calcium, le carbone élémentaire tel que le graphite ou le charbon, le kaolin, le métakaolin, le talc, le zircon, le chromite, le phosphure de bore ou de soufre, le bore élémentaire, le dioxyde de titane, l'apatite, l'hydroxyapatite, la pouzzolane, l'alumine, l'anthracite, l'olivine, la magnésite, la silice, la silice pyrogénée, ou la fumée de silice.

Les matières premières sous forme particulaire sont insolubles dans la suspension aqueuse obtenue dans l'étape (i).

Les particules minérales utilisées dans l'étape (i) du procédé de l'invention peuvent être des matériaux recyclés.

Il est à noter que ces minéraux peuvent jouer un rôle fonctionnel en plus de leur rôle structurel au sein d'une mousse rigide obtenue par le procédé de l'invention et conférer à cette dernière éventuellement des fonctions supplémentaires. Par exemple, certains minéraux sont électriquement conducteurs et peuvent absorber les ondes électromagnétiques.

La suspension aqueuse de l'étape (i) peut comprendre, en outre, entre 0 et 2% en poids total de la suspension aqueuse des fibres minérales ou organiques pour renforcer ou armer la mousse rigide obtenue par le procédé de l'invention. Lesdites fibres peuvent être des fibres minérales ou organiques synthétiques ou naturelles. Ces fibres peuvent être dispersées dans la suspension aqueuse ou dans la mousse humide stable avant solidification. Les fibres utilisées dans le procédé de l'invention ont une longueur supérieure à 10 µm et inférieur à 500 µm, et d'un ratio longueur/diamètre supérieur à 3, et en proportion pondérale inférieure à 1% par rapport à la masse finale de ladite mousse rigide.

Conformément à l'invention, l'agent moussant utilisé dans l'étape (i) du procédé est un ou le mélange de plusieurs agents moussants d'origine animale ou végétale, naturels ou synthétiques. Ces agents moussants sont choisis en particulier dans le groupe comprenant le blanc d'œuf, les lécithines, et les protéines naturelles ou synthétiques éventuellement hydrolysées, telles que les protéines sériques, notamment l'albumine, les caséines, les protéines du lactoserum, les protéines des plantes de la famille des *Fabaceae* et *Poaceae,* les protéines halogénées, ou un mélange des susdits agents moussants.

Ces agents moussants peuvent être un produit naturel obtenu par l'extraction ou purification à partir d'un animal ou d'un végétal ou un composé synthétique ayant la structure chimique ou la séquence d'acide aminé identique à celle d'un produit naturel extrait ou purifié à partir d'un animal ou un végétal.

Dans un mode de réalisation particulièrement avantageux, l'agent moussant utilisé dans l'étape (i) du procédé de l'invention est le blanc d'œuf ou l'albumine.

Conformément à l'invention, la suspension aqueuse de l'étape (i) peut comprendre en outre un tensioactif différent de l'agent moussant utilisé dans ladite suspension, ce qui permet de diminuer avantageusement la quantité d'agent moussant utilisée.

Ledit tensioactif peut être un tensioactif conventionnel, avantageusement les tensioactifs halogénés, les sucroesters, les acides et alcools gras.

Avantageusement, lorsque ledit tensioactif est présent dans la suspension, sa proportion pondérale est entre 0,3 et 10%, notamment entre 0,3 et 3% en poids total de cette suspension.

La suspension aqueuse de l'étape (i) peut comprendre en outre un agent texturant, ce qui permet de stabiliser, fluidifier, améliorer la texture de la mousse humide et optimiser la consommation en tensioactif en adaptant les caractéristiques des porosités aux besoins.

D'une autre manière appropriée, ledit agent texturant est un épaississant conventionnel et peut être choisi parmi les dérivés de cellulose, les gommes, l'agar-agar, les gélatines, les alginates, les carraghénanes, la pectine, et les sucres de betterave ou de canne à sucre.

On peut citer à titre d'exemple de dérivés de cellulose, la carboxyméthylcellulose, l'hydroxypropyl méthyl cellulose, l'hydroxyéthyl cellulose.

A titre d'exemple de gommes, on peut citer notamment les gommes naturelles, telles que la gomme de guar, la gomme de caroube, la gamme xanthane, ou la gomme gellane.

Avantageusement, la quantité d'agent texturant dans ladite suspension aqueuse est comprise entre 0 et 0,3% en poids de ladite suspension.

La suspension aqueuse de l'étape (i) peut comprendre en outre une molécule fonctionnelle.

Au sens de l'invention, on entend par « molécule fonctionnelle », un élément dont la présence dans une mousse rigide obtenue selon le procédé de l'invention n'est pas indispensable, mais permet de conférer à ladite mousse des fonctionnalités enrichissant les propriétés d'isolation thermique, réfractaire et acoustiques partagées par toutes les mousses rigides obtenues par le procédé de l'invention.

Dans un mode de réalisation particulier de l'invention, la suspension aqueuse de l'étape (i) comprend au moins une molécule fonctionnelle choisie parmi un catalyseur, un colorant, un composé possédant des propriétés de sorption des gaz ou d'absorption des ondes électromagnétiques.

Certaines molécules fonctionnelles peuvent également être incorporées dans la mousse humide obtenue dans l'étape (ii) susmentionnée.

Dans un autre mode de réalisation avantageux, la suspension susmentionnée dans l'étape (i) est constituée par :
- 35-40% d'eau en poids total de la susdite suspension,
- 5-35% en poids total de la susdite suspension d'au moins un silicate de métal alcalin, d'un aluminate de métal alcalin, ou leurs mélanges,
- 30-37% en poids total de la susdite suspension de particules minérales et 0-2% en poids totale de la susdite suspension de fibres minérales,
- 0,3-10%, notamment 0,3-5% en poids total de la susdite suspension d'un agent moussant choisi parmi le blanc d'œuf, les protéines sériques, notamment l'albumine, les caséines, les protéines du lactoserum, les protéines des plantes de la famille des *Fabaceae* et *Poaceae,* les protéines halogénées, ou un mélange des susdits agents moussants.

Dans un autre mode de réalisation avantageux, la suspension susmentionnée dans l'étape (i) est constituée par :
- 45-55% d'eau en poids total de la susdite suspension,
- 10-35% en poids total de la susdite suspension d'au moins un silicate de métal alcalin, d'un aluminate de métal alcalin, ou leurs mélanges,
- 30-40% en poids total de la susdite suspension de particules minérales et 0-2% en poids totale de la susdite suspension de fibres minérales,
- 0,3-10%, notamment 0,3-5% en poids total de la susdite suspension d'un agent moussant choisi parmi le blanc d'œuf, les protéines sériques, notamment l'albumine, les caséines, les protéines du lactosérum, les protéines des plantes de la famille des *Fabaceae* et *Poaceae,* les protéines halogénées, ou un mélange des susdits agents moussants, et
- 0-0,2% en poids total de la susdite suspension d'au moins un agent texturant.

Dans un autre mode de réalisation avantageux, la suspension susmentionnée dans l'étape (i) est constituée par :
- 35-60% d'eau en poids total de la susdite suspension,
- 5-35% en poids total de la susdite suspension d'au moins un silicate de métal alcalin, d'un aluminate de métal alcalin, ou leurs mélanges,
- 30-50% en poids total de la susdite suspension de particules minérales et 0-2% en poids totale de la susdite suspension de fibres minérales,
- 0,3-10%, notamment 0,3-5%, en poids total de la susdite suspension d'un agent moussant choisi parmi le blanc d'œuf, les protéines sériques, notamment l'albumine, les caséines, les protéines du lactosérum, les protéines des plantes de la famille des *Fabaceae* et *Poaceae,* les protéines halogénées, ou un mélange des susdits agents moussants,
- 0-0,3% en poids total de la susdite suspension d'au moins un agent texturant, et
- 0,3-10% en poids total de la susdite suspension d'au moins un tensioactif.

La susdite suspension aqueuse peut être préparée rapidement et préalablement à son emploi et se conserve aisément à condition d'être protégée du CO₂ afin d'empêcher toute carbonatation.

L'étape (ii) du procédé de l'invention permet de produire une mousse humide, une étape déterminant la forme et la porosité du matériau obtenu par le procédé de l'invention.

La capacité de produire une structure composite poreuse est essentielle pour les propriétés physico-chimiques des matériaux obtenus par le procédé de l'invention.

Les bulles de gaz sont dispersées dans la suspension aqueuse obtenue dans l'étape (i) par toutes méthodes conventionnelles.

La dispersion du gaz dans la suspension générant les micropores, le contrôle de l'apport de gaz et de l'énergie de foisonnement permet de régler la taille de ce type de pores et de l'adapter aux enjeux

A titre d'exemple, le gaz utilisé dans la susdite étape (ii) peut être l'air, l'argon, l'azote, ou tout autre gaz inerte ou leurs mélanges, le dioxyde de carbone, ou les mélanges d'au moins un gaz inerte avec le dioxyde de carbone. Le dioxyde de carbone amorce, s'il est présent, le processus de durcissement. L'homme du métier saura choisir le gaz selon son affinité pour l'eau, les silicates, les aluminates ou selon ses propres propriétés physiques.

Le durcissement de la mousse humide stable obtenue à la fin de l'étape (ii) peut être mis en œuvre par plusieurs méthodes connues dans l'art antérieur, notamment :
- par déshydration,
- par chauffage,
- par injection de CO₂,
- par ajout de poudre de matière sèche ou de poudre de métaux, ou
- par ajout d'acides, d'esters organiques, de carbonates d'alkylènes, ou d'esters acétiques.

Au sens de la présente invention, les termes « durcissement », « solidification » ou « rigidification » sont interchangeables.

A titre d'exemple, cette mousse humide stable peut être durcie par voie thermique, notamment par chauffage à une température entre 30°C et 200°C, ce qui conduit à la coagulation des constituants de ladite mousse humide, tels que des agents mousseux protéiniques, et à la formation de silice sous forme solide par évaporation de l'eau contenu dans ladite mousse humide.

Le chauffage du mélange mousseux peut être mis en œuvre par toutes méthodes conventionnelles, notamment par un four à micro-ondes.

Ce mode de durcissement peut être intégré aisément dans un procédé industriel.

Le durcissement d'une mousse humide par chauffage à l'aide d'un four à micro-ondes, pour obtenir une mousse rigide « prête à l'emploi » peut avoir lieu très rapidement, de l'ordre de quelques dizaines de secondes, ce qui permet une production industrielle sur site ou même l'obtention d'une mousse rigide ayant une structure tridimensionnel souhaitée à l'aide des technologies connues, par exemple « l'impression 3D ».

Le durcissement peut également être mise en œuvre par coagulation spontanée, suite à la modification du pH liée à la solubilisation partielle de CO₂, ce dernier pouvant être le CO₂ atmosphérique piégé initialement dans la suspension aqueuse ou au fur et à mesure pendant le durcissement, ou du CO₂ injecté dans la mousse humide avant ou pendant la stabilisation.

La coagulation peut également être déclenchée par apport de poudre de matière sèche ou de poudre de métaux alcalins finement divisée au mélange mousseux non stabilisé. Cette coagulation est le résultat de l'augmentation conjuguée du ratio SiO₂/Na₂O et de la matière solide par ajout de silicium, ferro-silicium, magnésium, aluminium à la mousse humide stable ou par ajout direct du silicate de sodium, ce qui entraine une réaction physico-chimique exothermique qui déshydrate le mélange mousseux.

Le durcissement peut également être mise en œuvre par apport d'acides faibles ou d'esters organiques, tels que des esters de polyalcools, les mono-, di-, ou tri-esters de glycérol, notamment les mono-, di-, ou triacétate de glycérol, ou des carbonates d'alkylènes, tels que le carbonate de propylène ou le carbonate d'éthylène, ou des esters acétiques, tels que l'acétate d'éthyle. Ces composants peuvent être apportés à la mousse humide.

La solidification de la mousse par apport du CO₂, d'acides ou d'esters peut nécessiter la mise en œuvre de quantité plus importante de silicates de métaux alcalins. L'homme de l'art saura ajuster la quantité des silicates de métaux alcalins utilisés selon son mode de stabilisation choisi.

Dans un mode de réalisation particulier, ledit procédé est mis en œuvre par production en flux continu. La production en flux continu peut être mise en œuvre par tout type de dispositif conventionnel.

Les mousses rigides issues du procédé de l'invention possèdent une faible conductivité thermique, à savoir d'environ 40-60 mW/m/K, ce qui leur permet d'être utilisées comme matériau de construction, matériau isolant thermique extérieures et/ou intérieures de bâtiment, dans l'industrie, les applications géotechniques, le transport, les mines, les ouvrages d'art, l'exploration ou la production pétrolière et gazière.

Du fait de la porosité élevée des mousses rigides obtenues par le procédé de l'invention, ces mousses peuvent également être utilisées comme matériau isolant phonique extérieur et/ou intérieur de bâtiment.

Comme le durcissement des mousses humides stables par diffusion du CO₂ éventuellement présent dans la mousse ou diffusion du CO₂ atmosphérique, les mousses rigides obtenues peuvent être utilisées comme mousse d'isolation thermique et/ou phonique à durcissement différé mais spontané.

Cette propriété permet d'éviter une étape supplémentaire de stabilisation par d'autres moyens, lorsque ce durcissement spontané est compatible avec l'application envisagée, tel le cas de certaines applications au bâtiment.

Dans un mode de réalisation particulier, l'invention porte sur l'utilisation des mousses rigides obtenues par le procédé décrit ci-dessus comme support d'isolation par le vide par application d'une enveloppe imperméable sur les panneaux de mousses rigides de l'invention. Ces derniers assurent alors l'obtention d'un volume vide d'air.

Une mousse rigide poreuse produite par le procédé de l'invention peut également être utilisée comme un élément de stockage de chaleur dans la fabrication d'un échangeur ou puits de chaleur, en raison de sa très bonne capacité thermique dans une large gamme de température et de son caractère poreux.

Un autre aspect avantageux des mousses rigides produites par le procédé de l'invention est qu'elles sont résistantes à très haute température.

L'invention est illustrée davantage par les exemples ci-après et les figures ci-après.

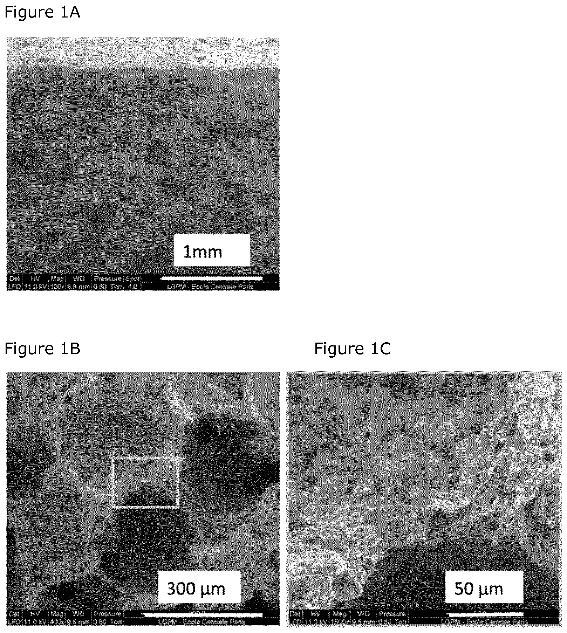

Les figures 1A, 1B et 1C présentent la microstructure des mousses rigides minérales obtenues par le procédé de l'invention observée par microscopie électronique à balayage. On observe la double porosité ouverte de la mousse rigide. Cette mousse possède des micropores de taille de 50 à 500 µm et des nanopores de taille de 50 à 500 nm. La figure 1A illustre les micropores de la mousse rigide. La figure 1B illustre plus en détail les parois des micropores. La figure 1C montre que les parois sont constituées par des nanopores.

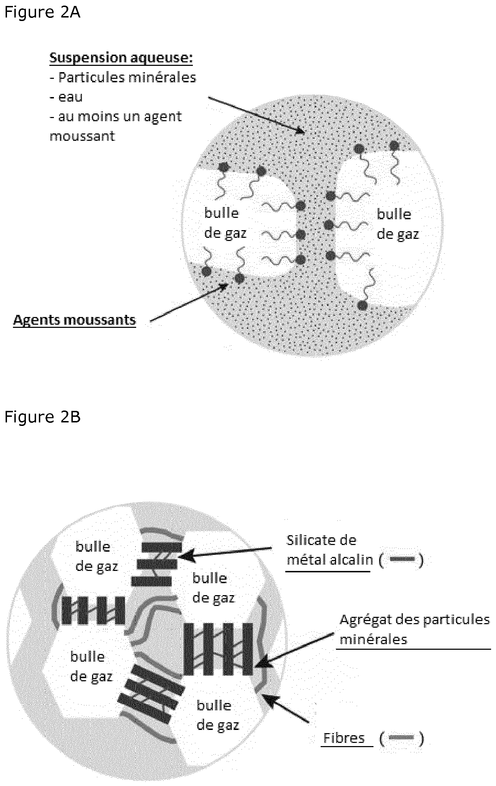

Les figures 2A et 2B illustrent respectivement la structure d'une mousse humide stable (figure 2A) et celle d'une mousse rigide (figure 2B) obtenue par le procédé de l'invention.

### Exemples

### 1. Propriété réfractaire des mousses rigides de l'invention

Les mousses rigides sous forme d'éprouvette épaisse de 6x15x15 cm sont obtenues selon le procédé de l'invention.

Des tests de résistance à la flamme ont été réalisés sur ces mousses rigides, dont l'une des faces a été exposée à la flamme de plus de 1500°C, produite par un électro-brûleur, durant plusieurs dizaines de minutes.

Ces tests montrent que l'intégrité de l'éprouvette a été maintenue et qu'un gradient de température de 200°C/cm est aisément obtenu.

La capacité de résistance aux chocs thermiques et la stabilité dimensionnelle de ces mousses sont également analysées.

La capacité de résistance aux chocs thermiques est testée par la coulée d'acier fortement allié à 1400°C sur une mousse rigide de l'invention.

La stabilité dimensionnelle d'une mousse a été testée par maintien à 1050°C pendant 2 heures. Durant ce test, la vérification de l'absence de toute modification notable de la macrostructure est faite.

Ces expériences montrent que les mousses rigides de l'invention sont très résistantes aux chocs thermiques et possèdent une très bonne stabilité dimensionnelle.

### 2. Test de conductivité thermique

Différents mesures de conductivité thermique ont été réalisées sur les susdites mousses rigides obtenues par le procédé de l'invention. La méthode utilisée est celle décrite par la Norme Internationale ISO 22007-2 :2015. Elle est basée sur l'utilisation d'un capteur plan transitoire qui permet d'accéder à la conductivité thermique. Les conductivités thermiques mesurées sont de l'ordre de 55 mW/mK pour des masses volumiques de 180 kg/m³.

## Revendications

1. Procédé de préparation d'une mousse rigide, minérale et poreuse, consistant en les étapes suivantes :
(i) la préparation d'une suspension aqueuse comprenant ou constituée par
- 35%-60% d'eau en poids total de la susdite suspension,
- 5-35% en poids total de la susdite suspension d'un silicate de métal alcalin, d'un aluminate de métal alcalin, ou de leurs mélanges,
- 30-60% en poids total de la susdite suspension de particules minérales insolubles dans la susdite suspension,
- 0-2% en poids total de la susdite suspension de fibres minérales ou organiques,
- 0,3-10%, notamment 0,3-5%, en poids total de la susdite suspension d'au moins un agent moussant d'origine animale ou végétale, naturel ou synthétique,
- éventuellement au moins un agent texturant, et
- éventuellement, au moins une molécule fonctionnelle, et
- éventuellement, un tensioactif différent de l'agent moussant utilisé dans ladite suspension,
(ii) la dispersion d'un gaz dans la susdite suspension pour obtenir une mousse humide stable ;
(iii) le durcissement de la mousse humide obtenue à la fin de l'étape (ii) pour obtenir ladite mousse rigide.

2. Procédé de préparation d'une mousse selon la revendication 1, **caractérisé en ce que** les particules minérales sont les particules d'un ou plusieurs minéraux choisis dans le groupe comprenant les verres, briques, grès, feldspaths, céramiques, argiles, argiles déhydroxylées, carbonates, phosphates, oxydes métalliques, borures de métaux ou de silicium, carbures de métaux ou de silicium, laitiers, cendres et mélanges silico-alumineux, nitrures, microballons de silice ou cénosphères, les silicates tels que le silicate de calcium, le carbone élémentaire tel que le graphite ou le charbon, le kaolin, le métakaolin, le talc, le zircon, le chromite, le phosphure de bore ou de soufre, le bore élémentaire, le dioxyde de titane, l'apatite, l'hydroxyapatite, la pouzzolane, l'alumine, l'anthracite, l'olivine, la magnésite, la silice, la silice pyrogénée, ou la fumée de silice.

3. Procédé de préparation d'une mousse minérale selon la revendication 1 ou 2, **caractérisé en ce que** ledit agent moussant est choisi parmi le blanc d'œuf, les lécithines, et les protéines naturelles ou synthétiques éventuellement hydrolysées, telles que les protéines sériques, notamment l'albumine, les caséines, les protéines du lactoserum, les protéines des plantes de la famille des *Fabaceae* et *Poaceae,* les protéines halogénées, ou un mélange des susdits agents moussants.

4. Procédé de préparation d'une mousse minérale selon l'une quelconque des revendications 1 à 3, **caractérisé en ce que** ladite molécule fonctionnelle est choisie parmi un catalyseur, un colorant, un composé possédant des propriétés de sorption des gaz ou d'absorption des ondes électromagnétiques.

5. Procédé de préparation d'une mousse minérale selon l'une quelconque des revendications 1 à 4, **caractérisé en ce que** ledit agent texturant est choisi parmi les dérivés de cellulose, les gommes, l'agar-agar, les gélatines, les alginates, les carraghénanes, la pectine, et les sucres de betterave ou de canne à sucre.

6. Procédé de préparation d'une mousse minérale selon l'une quelconque des revendications 1 à 5, **caractérisé en ce que** ledit tensioactif est choisi parmi un tensioactif halogéné, les sucroesters ou les acides et alcools gras.

7. Procédé de préparation d'une mousse minérale selon l'une quelconque des revendications 1 à 6, **caractérisé en ce que** ladite mousse humide est durcie :
- par déshydratation,
- par chauffage,
- par injection de CO₂,
- par ajout de poudre de matière sèche ou de poudre de métaux, ou
- par ajout d'acides, d'esters organiques, des carbonates d'alkylènes, ou d'esters acétiques.

8. Procédé de préparation d'une mousse minérale selon l'une quelconque des revendications 1 à 7, **caractérisé en ce que** ledit procédé est mis en œuvre par production en flux continu.

## Patentansprüche

1. Verfahren zur Herstellung eines festen, mineralischen und porösen Schaumstoffs, das aus den folgenden Schritten besteht:
(i) Herstellen einer wässrigen Suspension, umfassend oder bestehend aus
- 35 %-60 % Wasser, bezogen auf das Gesamtgewicht der obigen Suspension,
- 5-35 % eines Alkalimetallsilikats, Alkalimetallaluminats oder Mischungen davon, bezogen auf das Gesamtgewicht der obigen Suspension,
- 30-60 % in der Suspension unlöslichen mineralischen Teilchen, bezogen auf das Gesamtgewicht der obigen Suspension,
- 0-2 % mineralischen oder organischen Fasern, bezogen auf das Gesamtgewicht der obigen Suspension,
- 0,3-10 %, insbesondere 0,3-5 %, mindestens eines natürlichen oder synthetischen Schaumbildners tierischer oder pflanzlicher Herkunft, bezogen auf das Gesamtgewicht der obigen Suspension,
- gegebenenfalls mindestens einem Texturierungsmittel, und
- gegebenenfalls mindestens einem funktionellen Molekül, und
- gegebenenfalls einem Tensid, das sich von dem in der Suspension verwendeten Schaumbildner unterscheidet,
(ii) Dispergieren eines Gases in dieser Suspension, um einen stabilen Nassschaumstoff zu erhalten;
(iii) Härten des am Ende von Schritt (ii) erhaltenen nassen Schaumstoffs, um den festen Schaumstoff zu erhalten.

2. Verfahren zur Herstellung eines Schaumstoffs nach Anspruch 1, **dadurch gekennzeichnet, dass** die mineralischen Teilchen Teilchen aus einem oder mehreren Mineralien sind, ausgewählt aus der Gruppe umfassend Glasmaterialien, Ziegel, Sandstein, Feldspat, Keramik, Tone, Dehydroxytone, Carbonate, Phosphate, Metalloxide, Metall- oder Siliciumboride, Metall- oder Siliciumcarbide, Schlacken, Aschen und Silicium-Aluminium-Gemische, Nitride, Siliciumdioxid-Mikrokugeln oder Cenosphären, Silikate wie Calciumsilikat, elementaren Kohlenstoff wie Graphit oder Kohle, Kaolin, Metakaolin, Talkum, Zirkon, Chromit, Bor- oder Schwefelphosphid, elementares Bor, Titandioxid, Apatit, Hydroxyapatit, Puzzolan, Tonerde, Anthrazit, Olivin, Magnesit, Siliciumdioxid, pyrogenes Siliciumdioxid oder Silikastaub.

3. Verfahren zur Herstellung eines mineralischen Schaumstoffs nach Anspruch 1 oder 2, **dadurch gekennzeichnet, dass** das Schaummittel ausgewählt ist aus Eiklar, Lecithinen und natürlichen oder synthetischen Proteinen, die gegebenenfalls hydrolysiert sind, wie Serumproteine, insbesondere Albumin, Caseine, Molkenproteine, Proteine von Pflanzen aus der Familie der Fabaceae und Poaceae, halogenierte Proteine oder eine Mischung der Schaummittel.

4. Verfahren zur Herstellung eines mineralischen Schaums nach einem der Ansprüche 1 bis 3, **dadurch gekennzeichnet, dass** das funktionelle Molekül ausgewählt ist aus einem Katalysator, einem Farbstoff, einer Verbindung mit Gassorptionseigenschaften oder elektromagnetischen Wellenabsorptionseigenschaften.

5. Verfahren zur Herstellung eines mineralischen Schaumstoffs nach einem der Ansprüche 1 bis 4, **dadurch gekennzeichnet, dass** das Texturierungsmittel ausgewählt ist aus Cellulosederivaten, Gummen, Agar-Agar, Gelatinen, Alginaten, Carrageenanen, Pektin und Rüben- oder Rohrzucker.

6. Verfahren zur Herstellung eines mineralischen Schaumstoffs nach einem der Ansprüche 1 bis 5, **dadurch gekennzeichnet, dass** das Tensid ausgewählt ist aus einem halogenierten Tensid, Sucroestern oder Fettsäuren und Fettalkoholen.

7. Verfahren zur Herstellung eines mineralischen Schaumstoffs nach einem der Ansprüche 1 bis 6, dass der Nassschaum ausgehärtet wird:
- durch Dehydrierung,
- durch Erwärmung,
- durch CO₂-Injektion,
- durch Zugabe von Trockensubstanzpulver oder Metallpulver oder
- durch Zugabe von Säuren, organischen Estern, Alkylencarbonaten oder Essigsäureestern.

8. Verfahren zur Herstellung eines mineralischen Schaumstoffs nach einem der Ansprüche 1 bis 7, **dadurch gekennzeichnet, dass** das Verfahren mittels Fließfertigung durchgeführt wird.

## Claims

1. Method for preparing a rigid, mineral and porous foam, consisting of the following steps:
(i) preparing an aqueous suspension comprising or constituted by
- 35%-60% water relative to the total weight of the abovementioned suspension,
- 5-35% alkali metal silicate, alkali metal aluminate, or mixtures thereof, relative to the total weight of the abovementioned suspension,
- 30-60% mineral particles insoluble in the abovementioned suspension relative to the total weight of the abovementioned suspension,
- 0-2% mineral or organic fibres relative to the total weight of the abovementioned suspension,
- 0.3-10%, in particular 0.3-5%, at least one foaming agent of animal or plant, natural or synthetic origin relative to the total weight of the abovementioned suspension,
- optionally at least one texturing agent, and
- optionally at least one functional molecule, and
- optionally a surfactant different from the foaming agent used in said suspension,
(ii) dispersing a gas in the abovementioned suspension to obtain a stable moist foam;
(iii) hardening the moist foam obtained at the end of step (ii) to obtain said rigid foam.

2. Method for preparing a foam according to claim 1, **characterized in that** the mineral particles are particles of one or more minerals selected from the group comprising glasses, bricks, sandstones, feldspars, ceramics, clays, dehydroxylated clays, carbonates, phosphates, metal oxides, metal or silicon borides, metal or silicon carbides, slag, ash and alumino-silicate mixtures, nitrides, silica microbeads or cenospheres, silicates such as calcium silicate, elemental carbon such as graphite or coal, kaolin, metakaolin, talc, zircon, chromite, boron or sulphur phosphide, elemental boron, titanium dioxide, apatite, hydroxyapatite, pozzolan, alumina, anthracite, olivine, magnesite, silica, pyrogenic silica, or silica fume.

3. Method for preparing a mineral foam according to claim 1 or 2, **characterized in that** said foaming agent is selected from egg white, lecithins, and natural or synthetic proteins, optionally hydrolysed, such as serum proteins, in particular albumin, caseins, whey proteins, plant proteins from the family of the *Fabaceae* and *Poaceae,* halogenated proteins, or a mixture of the abovementioned foaming agents.

4. Method for preparing a mineral foam according to any one of claims 1 to 3, **characterized in that** said functional molecule is selected from a catalyst, a colouring agent, a compound having gas sorption or electromagnetic wave absorption properties.

5. Method for preparing a mineral foam according to any one of claims 1 to 4, **characterized in that** said texturing agent is selected from cellulose derivatives, gums, agar-agar, gelatins, alginates, carrageenans, pectin, and beet or cane sugars.

6. Method for preparing a mineral foam according to any one of claims 1 to 5, **characterized in that** said surfactant is selected from a halogenated surfactant, sucrose esters or fatty acids and alcohols.

7. Method for preparing a mineral foam according to any one of claims 1 to 6, **characterized in that** said moist foam is hardened by:
- dehydration,
- heating,
- CO₂ injection,
- addition of dry matter powder or metal powder, or
- addition of acids, organic esters, alkylene carbonates or acetic esters.

8. Method for preparing a mineral foam according to any one of claims 1 to 7, **characterized in that** said method is implemented by continuous flow manufacturing.
